# Europäisches Patentamt
## European Patent Office
## Office européen des brevets

(19)

(11) Veröffentlichungsnummer: **0 086 889**
A2

(12) # EUROPÄISCHE PATENTANMELDUNG

(21) Anmeldenummer: 82111489.9

(22) Anmeldetag: 10.12.82

(51) Int. Cl.³: **C 08 F 220/12**
**C 08 F 2/24, C 08 F 218/04**
**D 06 M 15/38**

(30) Priorität: 19.02.82 DE 3205904

(43) Veröffentlichungstag der Anmeldung:
31.08.83 Patentblatt 83/35

(84) Benannte Vertragsstaaten:
AT BE CH DE FR GB IT LI NL

(71) Anmelder: Chemische Fabrik Pfersee GmbH
Färberstrasse 4
D-8900 Augsburg(DE)

(72) Erfinder: Singer, Heinrich
Brachflecken 7
D-8901 Horgau(DE)

(72) Erfinder: Rössler, Erich
Parkstrasse 13
D-8901 Stadtbergen 2(DE)

(72) Erfinder: Stechele, Werner
Nebelhornstrasse 16
D-8901 Diedorf(DE)

(54) Verfahren zur Herstellung von Emulsionscopolymerisaten, die nach dem Verfahren hergestellten Emulsionscopolymerisate und deren Verwendung.

(57) Die erfindungsgemäßen Emulsionscopolymerisate werden durch Emulsionscopolymerisation von ungesättigten Estern und (teil)verethertem N-Methylol-(meth)acrylamid und/oder N-Methylol(meth)allylcarbamat in Gegenwart von ausgewählten Verbindungen als Emulgatoren und in Gegenwart von höheren Fettalkoholen hergestellt.

Mit den erfindungsgemäßen Emulsionscopolymerisaten behandeltes, vor allem beschichtetes Fasermaterial, insbesondere Textilmaterial zeigt unter der Einwirkung von Wasser keine Anquellung (als "Weißquellung" bezeichnet), keine Tendenz zum "Schreiben" und keine Bruchstellen des Filmes beim Zusammenknautschen (als "Weißbruch" bezeichnet).

EP 0 086 889 A2

Croydon Printing Company Ltd.

— 1 —

CHEMISCHE FABRIK PFERSEE GMBH

Verfahren zur Herstellung von Emulsionscopolymerisaten, die nach dem Verfahren
hergestellten Emulsionscopolymerisate
und deren Verwendung

Die Erfindung betrifft ein Verfahren zur Herstellung von
Emulsionscopolymerisaten von Estern organischer Verbindungen, die eine zur Polymerisation befähigte Doppelbindung enthalten und sich von einwertigen Säuren ableiten, und damit copolymerisierbaren, ausgewählten Verbindungen in wäßrigem Medium. Die Emulsionscopolymerisation wird mit ausgewählten Emulgiermitteln in Gegenwart von höheren Fettalkoholen durchgeführt. Die so erhaltenen Copolymeremulsionen sind für die Behandlung von
Faserstoffen, insbesondere von Textilien, geeignet,
denen sie besondere, wertvolle und vorteilhafte Eigenschaften verleihen.

Aus der GB-PS 935 036 sind wäßrige Polymerisatemulsionen
mit niedrigem Elektrolytgehalt, vor allem auf Basis von
Acryl- und Methacrylsäureestern bekannt, die Kunststofffilme ergeben, die bei Einwirkung von Wasser nicht weiß
werden. Diese Polymerisate sind offensichtlich zur Behandlung von Metallen bestimmt.

Bringt man derartige Polymerisate auf Faserstoffe, wie Textilmaterial auf, so tritt hier nach Auflegen von Wassertropfen über einen längeren Zeitraum eine deutliche "Weißquellung" auf, wie das Weißwerden von Polymerisatfilmen unter der Einwirkung von Wasser, das auf einer Anquellung des Polymerisats beruht, bezeichnet werden soll. Außerdem zeigen die so behandelten Textilien eine ausgeprägte Neigung zum "Schreiben". Hierunter ist die Eigenschaft zu verstehen, daß nach Einwirkung von örtlichen Druckbeanspruchungen Glanzunterschiede zurückbleiben. Streicht man mit einem harten Gegenstand, beispielsweise mit dem stumpfen Ende eines Bleistiftes, über ein derartig behandeltes Textilmaterial, so bleiben Striche zurück, durch die der Gebrauchswert des Textilmaterials empfindlich beeinträchtigt wird.

Die nach der GB-PS 935 036 hergestellten Emulsionspolymerisate sind somit zur Behandlung von Textilien nicht geeignet.

Aus der US-PS 2 562 440 sind Polymeremulsionen auf Basis von Vinylacetat oder Acrylsäureestern bekannt geworden, die festhaftende Filme mit nur geringer Opazität ergeben und die frei von hydrophilen Kolloiden sind.

Sie enthalten zwar zusammen mit einer Mischung von zwei ausgewählten anionischen Substanzen geringe Mengen eines höheren Fettalkohols als Emulsionsstabilisator, doch ist für den angestrebten Zweck entscheidend sowohl das Verhältnis der Emulgatoren zueinander als auch in Form der Mischung zu dem Fettalkohol, so daß in diesem Fall dem Fachmann eine andere Lehre gegeben wird. Auch derartige Emulsionen sind zur Behandlung von Textilien nicht geeignet, da sie in Kombination mit anderen in der Textilindustrie üblichen Hilfsmitteln wegen des allein verwendeten anionischen Emulgators zu Ausscheidungen neigen. Darüber hinaus zeigen auch diese Polymerisate, auf Textilien aufgebracht, eine ausgeprägte Schreibtendenz und die Weißquellung wird nicht verhindert.

Der Erfindung liegt die Aufgabe zugrunde, Emulsionscopolymerisate zur Verfügung zu stellen, die auf Faserstoffe aufgebracht unter der Einwirkung von Wasser keine Weißquellung ergeben und keine Schreibtendenz aufweisen. Darüber hinaus sollen die Textilien keinen "Weißbruch" ergeben. Unter Weißbruch ist dabei die Erscheinung zu verstehen, daß der auf dem Textilmaterial haftende Film an Knickstellen unter Ausbildung von weißlichen Flecken oder Zonen bricht. Knautscht man beispielsweise ein so behandeltes Textilmaterial in der Hand zusammen, so verbleiben nach dem Entspannen sogenannte "Krähenfüße". Hierauf wird weiter unten noch näher eingegangen werden.

Es wurde nun überraschenderweise gefunden, daß Emulsionscopolymerisate auf Basis von Estern organischer Verbindungen, die eine zur Polymerisation befähigte Doppelbindung enthalten und sich von einwertigen Säuren ableiten, und ausgewählten Comonomeren mit bestimmten reaktiven Gruppen die geschilderten Nachteile des Standes der Technik nicht aufweisen, wenn die Polymerisation in Gegenwart einer bestimmten Menge eines höheren Fettalkohols und unter Verwendung von bestimmten Emulgatoren durchgeführt worden ist.

Gegenstand der Erfindung ist somit ein Verfahren zur Herstellung von Emulsionscopolymerisaten auf Basis von Estern organischer Verbindungen, die eine zur Polymerisation befähigte Doppelbindung enthalten und sich von einwertigen Säuren ableiten, und damit copolymerisierbaren, ungesättigten Verbindungen, in wäßrigem System in Gegenwart von Emulgatoren, die zur Bildung von Öl/Wasser-Emulsionen befähigt sind, und Fettalkoholen mit 10 bis 22 C-Atomen unter den für eine Radikalkettenpolymerisation üblichen Bedingungen und Hilfsmitteln, dadurch gekennzeichnet, daß man

a) als Emulgatoren Addukte von Alkylenoxyden an Fettalkohole mit 8 bis 22 C-Atomen, an Alkylphenole mit Alkylresten mit 4 bis 12 C-Atomen, deren Mischungen miteinander und gegebenenfalls Mischungen derselben mit untergeordneten Mengen an üblichen anionischen Emulgatoren bzw. mit Alkali- $C_{6-12}$-alkylphenolglykolethersulfaten bis zum Gewichtsverhältnis 1 : 3,

b) als Ester von einwertigen Säuren 100 bis 70 GT (= Gewichtsteile) Acrylsäure- und/oder Methacrylsäureester von Alkoholen mit 1 bis 12 C-Atomen, und/oder Vinylester von Carbonsäuren mit 2 bis 12 C-Atomen und deren Mischungen, wobei der Anteil an Methacrylsäuremethylester und/oder Vinylacetat, bezogen auf die Komponente b), höchstens 60 Gew.% beträgt, und zusätzlich

c) 0 bis 30 GT mit den Komponenten b) und d) copolymerisierbare Verbindungen, ·wobei die Summe von b) und c) 100 GT beträgt,

d) 2 bis 10 GT N-Methylolacryl- und/oder N-Methylolmethacrylamid, das mindestens zu 20 Mol% mit einem Alkohol mit 1 bis 6 C-Atomen verethert ist, und/oder N-Methylolallyl- und/oder N-Methylolmethallylcarbamat und deren Ether mit 1 bis 6 C-Atomen, und deren Mischungen, und daß man

e) den Fettalkohol in einer Menge von 1 bis 16 GT einsetzt.

- 5 -

Außerdem werden die nach dem erfindungsgemäßen Verfahren hergestellten Emulsionscopolymerisate und deren Verwendung zur Behandlung von Faserstoffen, insbesondere von Textilmaterial, beansprucht, wobei die Beschichtung von Textilmaterial besonders hervorgehoben sei.

Unter den Estern organischer Verbindungen, die eine zur Polymerisation befähigte Doppelbindung enthalten und sich von einwertigen Säuren ableiten, sind in erster Linie die Acrylsäure- und Methacrylsäureester von Alkoholen mit 1 bis 12 C-Atomen zu nennen, wie Acrylsäure- und Methacrylsäureester des Methanols, Ethanols, n- und i-Propanols, Butanols usw. einschließlich des Laurylalkohols. Diese Ester werden bevorzugt in Mischungen untereinander angewandt, da es hierdurch möglich ist, den Griff des behandelten Textilmaterials in einer bestimmten gewünschten Richtung zu beeinflussen. Hinsichtlich der Verhinderung der Weißquellung hat sich Methacrylsäuremethylester am besten bewährt; doch kommt dessen alleinige Anwendung als Komponente b) nicht in Betracht, da mit derartigen Polymerisaten, was an sich dem Fachmann bekannt ist, sehr harte und starre Gewebe erhalten werden. Aus diesem Grunde ist die Menge des verwendeten Methacrylsäuremethylesters, bezogen auf die Summe der als Komponente b) eingesetzten Monomere auf höchstens 60 Gew.% begrenzt.

Um aber das günstige Verhalten des Methacrylsäuremethylesters hinsichtlich der Weißquellung auszunutzen, ist dieser eine bevorzugte Komponente, die zusammen mit höheren Estern der Methacryl- und insbesondere der Acrylsäure als Komponente b) eingesetzt wird. Besonders bewährt haben sich dabei als Komponente b) Mischungen aus Methacrylsäuremethylester und Acrylsäureester von Alkoholen mit 2 bis 8 C-Atomen, wobei wegen ihres weichmachenden Einflusses Acrylsäurebutyl- und -2-ethyl-hexyl-

- 6 -

ester besonders geeignet sind. Es sei jedoch bemerkt, daß
der Einsatz von Methacrylsäuremethylester nicht zwingend
erforderlich ist.

Als Komponente b) kommen des weiteren die Vinylester von
Carbonsäuren mit 2 bis 12 C-Atomen in Betracht. Zu nennen
sind Vinylacetat, -propionat, -butyrat und -laurat. Vinylacetat allein ist als Komponente b) nicht geeignet, da
Filme aus diesem Polymerisat auf dem Textilmaterial stark
brüchig sind, so daß auch hier als Komponente b) Mischungen
mit Vinylestern höherer Carbonsäuren, wie insbesondere
Vinylester der tertiären Dekansäure angezeigt sind. Der
Anteil an Vinylacetat an der Komponente b) sollte somit
60 Gew.% nicht überschreiten.

Selbstverständlich können als Komponente b) auch Mischungen
aus Acryl- und/oder Methacrylsäureestern mit Vinylestern
im Rahmen des erfindungsgemäßen Verfahrens eingesetzt
werden.

Außer dem Ester der Komponente b) ist es häufig zweckmäßig, noch weitere, mit den Komponenten b) und d) (siehe
unten) copolymerisierbare Verbindungen    -    hier bezeichnet mit "Komponente c)"    -,    und zwar in einer
Menge bis zu 30 Gew.%, gerechnet auf die Summe von b)
und c), einzupolymerisieren, um bestimmte Eigenschaften
zu beeinflussen. Genannt seien hierzu beispielsweise
Styrol, Vinylether, wie z.B. Isobutylvinylether,
Glycidylmethacrylat, Diester von zweiwertigen, ungesättigten Säuren wie der Maleinsäure-di-butylester und
der Fumarsäure-di-ethylhexylester und ähnliche,die im
allgemeinen nur in geringen Mengen, d.h. bis zu 10 Gew.%,
bezogen auf die Summe der Komponenten b) und c), eingesetzt werden.

Besonders hervorgehoben seien jedoch Methacrylnitril und insbesondere Acrylnitril, da durch deren Einpolymerisation die Reinigungsbeständigkeit der angestrebten Eigenschaften der mit diesen Polymerisaten behandelten Textilien verbessert werden kann. Hier kommen Anteile in Betracht, die bis zu 30 Gew.%, bezogen auf die Summe von b) und c), betragen können.

Die Einpolymerisation von bestimmten Mengen an N-Methylolacrylamid und N-Methylolmethacrylamid, die mindestens zu 20 Mol% mit einem Alkohol mit 1 bis 6 C-Atomen verethert sein müssen und deren Mischungen, und/oder von N-Methylolallylcarbamat, N-Methylolmethallylcarbamat und deren Ether mit 1 bis 6 C-Atomen und deren Mischungen - als Komponente d) bezeichnet - ist von erfindungswesentlicher Bedeutung. Es hat sich gezeigt, daß allein durch die Einpolymerisation dieser Komponente d) der oben schon kurz erwähnte Weißbruch bzw. beim Knautschen und Entspannen des Textilmaterials, die Bildung von "Krähenfüßen" verhindert werden kann. Eigenartigerweise müssen das N-Methylolacrylamid und das N-Methylolmethacrylamid mindestens zu 20 Mol% mit einem Alkohol mit 1 bis 6 C-Atomen verethert sein. Bei Einpolymerisation von nichtverethertem N-Methylolacrylamid zeigt sich darüber hinaus bei den behandelten Textilien unter der Einwirkung von Wasser eine erhebliche Weißquellung und das Schreiben wird nicht zuverlässig verhindert. Dies ist besonders bei Emulsionscopolymerisaten von Bedeutung, die Methacrylsäuremethylester einpolymerisiert enthalten, da diese auf dem Fasermaterial besonders zum Schreiben neigen. Erst beim Einsatz von mindestens zu 20 Mol% veretherten N-Methylolacrylamid werden Emulsionscopolymere erhalten, die auf Textilmaterial keine Weißquellung ergeben und keine Schreibtendenz aufweisen. Diese Eigen-

- 8 -

schaften werden umso sicherer erreicht, je höher der
Veretherungsgrad des N-Methylolacryl- bzw. -methacrylamids ist. Am besten bewährt sich hier ein im Handel
erhältliches Isobutoxymethylacrylamid, das ca. 85 Gew.%
Isobutoxymethylacrylamid neben geringen Mengen an Acrylamid, N-Methylolacrylamid und Isobutanol enthält, weshalb
das Isobutoxymethylacrylamid bevorzugt wird. Aber selbstverständlich sind auch die Methyl-, Ethyl- und Propylether, ferner die Amyl- und Hexylether des N-Methylolacryl- bzw. -methacrylamids geeignet, soweit der Veretherungsgrad mindestens 20 Mol% beträgt. Die technischen
Produkte enthalten dann von der Herstellung her selbstredend nicht unerhebliche Mengen an Methylolacrylamid
und ferner Acrylamid sowie Reste des zur Veretherung
eingesetzten Alkohols.

Setzt man anstelle des zumindest teilweise veretherten
N-Methylolacryl- bzw. -methacrylamids N-Methylolallyl-
bzw. -methallylcarbamat ein, so braucht dieses eigenartigerweise nicht verethert zu sein. Denn auch durch
die Einpolymerisation des nicht veretherten N-Methylolallylcarbamates wird die Weißquellung verhindert.

Von der geschilderten Komponente d) werden 2 bis 10 GT
je 100 GT der Summe der Komponenten b) und c) eingesetzt.
Am besten bewährt hat sich ein Bereich von ca. 3 bis 6
GT.

Von besonderer Bedeutung ist der Zusatz des Fettalkohols
mit 10 bis 22 C-Atomen. Ohne diesen Zusatz wird die Weißquellung nicht verhindert. Dieser Fettalkohol, genannt
seien Lauryl-, Myristyl-, Palmityl-, Stearyl-, aber
auch Oleylalkohol, muß in Mengen von 1 bis 16 GT je 100 GT der Summe der Komponenten b) und c) erfolgen. Aufgrund der Angaben in der bereits vorne erwähnten US-PS 2 562 440 hatte man nicht erwarten können, daß sich der Fettalkohol, noch dazu in Mengen von 1 bis 16 GT je 100 GT der Summe der Komponenten b) und c) mit den genannten Emulgatoren emulgieren lassen und sich nicht störend auf die Stabilität der Emulsionspolymerisate auswirken würde. Denn, wie Versuche gezeigt haben, kommt es bei der Emulgierung der Fettalkohole in den angegebenen Mengen mit anderen Emulgatoren leicht zu Abscheidungen und die Weißquellung wird nicht verhindert. Erst durch das Zusammenwirken der Fettalkohole in den angegebenen Mengen mit den ausgewählten Emulgatoren und den Monomeren wird die Weißquellung verhindert. Es hat sich gezeigt, daß von den geradkettigen, gesättigten Fettalkoholen Mengen von 3 bis 10 GT völlig ausreichend, ja sogar bevorzugt sind, da eine zu hohe Menge  - je nach den eingesetzten Monomeren  - zum Dickwerden der Emulsion führen kann. Demgegenüber sind von ungesättigten Fettalkoholen höhere Mengen, d.h. bis zu 15 GT, erforderlich, jeweils gerechnet auf 100 GT der Summe der Komponenten b) und c).

Es ist wichtig, daß der Fettalkohol während des Polymerisationsverfahrens in emulgierter Form zum Einsatz gelangt. Es ist auch möglich, den gesamten Fettalkohol in emulgierter Form, zweckmäßig mit einem Teil der Komponente b) zu Beginn der Polymerisation vorzulegen. Setzt man den Fettalkohol erst dem fertigen Emulsionspolymerisat zu, so zeigt das behandelte Textilmaterial deutlich schlechtere Ergebnisse hinsichtlich der Weißquellung.

Als Emulgatoren  - Komponente a)  - kommen die dem Fachmann bekannten Addukte von Alkylenoxyden an Fettalkohole mit 8 bis 22 C-Atomen, an Alkylphenole mit Alkylresten mit 4 bis 12 C-Atomen und deren Mischungen in Betracht, soweit sie zur Bildung von Öl/Wasser-Emulsionen befähigt sind. Unter den Alkylenoxyden sind dabei Butylen-, Propylen- und insbesondere Ethylenoxyd zu verstehen. Dabei kommen auch Addukte in Betracht, die beispielsweise sowohl Propylenoxy- als auch Ethylenoxy-Einheiten enthalten. Dabei ist darauf zu achten, daß der hydrophile Charakter des Emulgators nicht zu stark überwiegt, da hierdurch die Weißquellung gefördert wird. Bewährt haben sich Alkylphenole, die durchschnittlich 20 bis 90 Mol Ethylenoxyd je Mol Alkylphenol, insbesondere 30 bis 60 Mol Ethylenoxyd angelagert enthalten. Besonders geeignet sind jedoch Fettalkoholethoxylate mit durchschnittlich 10 bis 50, insbesondere 20 bis 30 Mol angelagerten Ethylenoxyd je Mol Fettalkohol. Der Ausdruck "durchschnittlich" ist dabei so zu verstehen, daß hiermit auch Mischungen aus beispielsweise einem Fettalkohol der 5 Alkylenoxydeinheiten und einen Fettalkohol, der 20 Ethylenoxydeinheiten angelagert enthält, erfaßt werden. Entsprechendes gilt selbstredend auch für die alkoxylierten Alkylphenole.

Diese Emulgatoren können allein, in Mischung miteinander und gegebenenfalls in Mischung mit untergeordneten Mengen von üblichen anionaktiven Emulgatoren verwendet werden. Spezielle anionaktive Emulgatoren, nämlich Alkali-$C_{6-12}$-alkylphenolglykolethersulfate mit 2 bis 5 Alkylen-, insbesondere Ethylenoxydeinheiten können auch im Überschuß (bis zum Verhältnis 3 Teile anionaktiver Emulgator auf 1 Teil nichtionogener Emulgator) eingesetzt werden.

Der Emulgator kommt dabei in Mengen von 1 bis 10 Gew.%, bezogen auf das Gesamtgewicht der zu emulgierenden Substanzen, zum Einsatz.

Die Polymerisation wird als Radikalkettenpolymerisation durchgeführt, wobei als Initiatoren die bekannten anorganischen und organischen Peroxydverbindungen, vor allem wasserlösliche wie Wasserstoffperoxyd, Natrium-, Kalium- oder Ammoniumperoxydisulfat oder Acetylperoxyd eingesetzt werden. Bevorzugt wird Wasserstoffperoxyd, da nach dessen Zerfall keine störenden Ionen zurückbleiben. Bei der Verwendung von Peroxydisulfaten kann, wenn besonders hohe Anforderungen an die Verhinderung der Weißquellung gestellt werden, das gebildete Sulfat nachträglich gefällt werden, wie es in der GB-PS 935 036 beschrieben ist. Bevorzugt wird die Polymerisation als Redox-Polymerisation durchgeführt, wobei die Initiatoren kombiniert mit Reduktionsmitteln zur Anwendung kommen. Als solche seien beispielsweise Schwefeldioxyd, Alkalidisulfite, Alkali- und Hydrogensulfite und Formaldehyd-Sulfoxylat genannt. Daneben können auch Hilfsmittel wie Puffersubstanzen, Regler, Schauminhibitoren und dergleichen mitverwendet werden. Auch der Zusatz geringer Mengen üblicher anionischer Emulgatoren, d.h. bis zu 0,5 GT je 100 GT der Summe der Komponenten b) und c), wirkt sich nicht störend aus. Unter den üblichen anionaktiven Emulgatoren sind die dem Fachmann geläufigen Emulgatoren wie Alkylsulfate und -sulfonate, Paraffinsulfonate, Alkylsulfobernsteinsäureester und deren Derivate sowie anionische Verbindungen auf Basis von Phosphor- und Phosphonsäureestern zu verstehen.

Die Polymerisation kann im Prinzip so ausgeführt werden, daß sämtliche Bestandteile in Emulsionsform vorgelegt und die Polymerisation durch Erhitzen und Zugabe des Initiators und gegebenenfalls des Reduktionsmittels ausgelöst wird. Da die Polymerisation in diesem Falle jedoch thermisch schwer zu beherrschen ist, können die Bestandteile auch in zwei oder mehr Teilabschnitten zugefügt werden. Am besten hat es sich jedoch bewährt, die Polymerisation isotherm durchzuführen. Dabei werden die Monomeren mit einem Teil des zur Polymerisation erforderlichen Wassers, dem Emulgator, dem Fettalkohol und eventuellen Hilfsmitteln in eine Voremulsion übergeführt. Der Rest des Wassers und eventuelle Hilfssubstanzen werden vorgelegt und auf ca. 50° bis 60°C erwärmt. Nach Zugabe eines Teiles des Initiators fügt man einen Teil der Voremulsion und gegebenenfalls Reduktionsmittel zu, wobei die Polymerisation anspringt und die Temperatur über 60°C bis zu ca. 75°C ansteigt. Nun wird durch kontinuierliches Zulaufenlassen der restlichen Voremulsion und entsprechendes Kühlen sowie Dosierung der Initiatoren und gegebenenfalls Reduktionsmittel bei dieser Temperatur polymerisiert. Das geschilderte Polymerisationsverfahren mit Hilfe der Voremulsion hat sich als besonders zweckmäßig herausgestellt. Doch sind selbstverständlich auch Varianten möglich, nach denen auf die Bildung von Voremulsionen verzichtet wird. Derartige Verfahren sind dem Fachmann geläufig.

Bei der Polymerisation wird im allgemeinen ein pH-Wert von 4,5 bis 6,5 aufrechterhalten. Die Herstellung einer Voremulsion wird vor allem deswegen bevorzugt, da in diese Emulsion neben den Monomeren und dem Emulgator auch die erforderlichen Hilfssubstanzen, wie Puffer, Entschäumer und Regler, insbesondere aber auch der höhere Fettalkohol eingearbeitet werden können. Hierdurch wird die Kontrolle über den Polymerisationsverlauf wesentlich erleichtert. Die Polymerisationsinitiatoren können auch gesondert dosiert werden. Zur Nachreaktion empfiehlt sich der Einsatz von wasserunlöslichen Initiatoren wie Lauroyl-, Benzoylperoxyd oder tert. Butylhydroperoxyd. Hierdurch wird der Restgehalt an nicht umgesetzten Monomeren auf ein Minimum reduziert.

Das für die Durchführung der Emulsionspolymerisation in wäßrigem System erforderliche Wasser wird im allgemeinen in solchen Mengen eingesetzt, daß, bezogen auf die Summe der Komponenten b), c) und d), eine 35- bis 65-gewichts-%ige Polymerisationsemulsion entsteht.

Die erfindungsgemäß hergestellten Emulsionscopolymerisate eignen sich hervorragend als Appretur- und insbesondere als Beschichtungsmittel für Fasermaterialien, vor allem für Textilmaterial. Gemäß dem Ziel der Erfindung, Textilmaterial zu erhalten, das nach der Behandlung mit den Emulsionscopolymerisaten keine Weißquellung ergibt, keine Tendenz zum Schreiben aufweist und nicht zum Weißbruch neigt, kommen als Textilmaterialien vor allem Markisen, Campingartikel und Rucksackstoffe sowie Segeltuche und andere Schwergewebe sowie technische Gewebe in Betracht. Aber auch zur Behandlung von leichteren Geweben, wie von Anorakstoffen, sind die erfindungsgemäß hergestellten Emulsionscopolymerisate geeignet. Die genannten Textilmaterialien können sowohl aus natürlichen als auch aus synthetischen Fasern und deren Mischungen untereinander wie beispielsweise aus Baumwolle, Polyester und Polyacrylnitril bestehen. Auch zur Behandlung von Glasfasermatten und -geweben sind die erfindungsgemäß hergestellten Copolymerdispersionen geeignet. Schließlich kann das Textilmaterial als Garn oder Seil und in gewebter, gewirkter oder auch in Vliesform vorliegen.

Die erfindungsgemäß hergestellten Emulsionscopolymerisate können auf die Substrate in üblicher Weise, wie z.B. durch Foulardieren oder durch Besprühen aufgebracht werden. Bevorzugt werden sie jedoch durch Beschichten aufgebracht. Zu diesem Zweck werden die Emulsionen durch Zusatz von bekannten Verdickungsmittel, genannt seien Cellulosederivate, wie Hydroxyethylcellulose oder Polyacrylsäure in Form der Ammoniumsalze , und gegebenenfalls weiteren, für die Beschichtung üblichen Zusatzmitteln zu einer pastenförmigen Konsistenz verdickt und mit bekannten Rakelvorrichtungen als Paste in einem oder mehreren Strichen mit Zwischentrocknung aufgetragen.

Soll das Emulsionscopolymerisat im Foulard-Verfahren auf das Textilmaterial aufgebracht werden, so wird es zu der gewünschten Konzentration verdünnt und das Textilmaterial gegebenenfalls nach Zusatz von in der Textilindustrie üblichen Textilhilfsmitteln - genannt seien beispielsweise Aminoplastbildner, Flammschutzmittel und die entsprechenden Härtungskatalysatoren - mit Ausrüstungsflotte getränkt, von überflüssiger Flotte befreit, getrocknet und je nach den Erfordernissen auskondensiert.

Die so behandelten Textilien zeigen keine Weißquellung, keinen Weißbruch und keine Schreib-tendenz. Wird zusätzlich auf eine gute Wasserabweisung, insbesondere auf das Abperlen von Wasser hoher Wert gelegt, so kann das Textilmaterial noch mit einem Hydrophobiermittel in üblicher Weise nachimprägniert werden.

Für die Prüfung der mit den Emulsionscopolymerisaten behandelten Textilmaterialien haben sich einfache Labortests bewährt:

A) Weißquellung:
Auf das behandelte Textilmaterial werden 3 ml Wasser mit der Pipette aufgesetzt und die darunter liegende Fläche nach 2, 6 und 8 Stunden beobachtet. Ein über 8 Stunden hinausgehender Test liefert keine zuverlässigen Werte mehr, da nach dieser Zeit ein zu großer Teil des Wassers verdunstet ist oder auch durch das Gewebe durchgeschlagen hat (besonders nach Behandlung

- 15 -

im Foulardverfahren), ohne daß es zu einer Weißquellung gekommen ist.

Es bedeuten nach 2, 6 und 8 Stunden:

+++ sehr gut, keine Anzeichen von Weißquellung nach
8 Stunden

++ sehr gut, keine Anzeichen für eine Weißquellung nach
6 Stunden

+ gut, leichte Anzeichen für eine beginnende Weißquellung nach 6 Stunden

+- zufriedenstellend, leichte Anzeichen für eine beginnende Weißquellung nach 2 Stunden

- unbrauchbar, deutliche Weißquellung nach kurzer Zeit

B) Schreibtendenz:
Man fährt mit dem stumpfen Ende eines Bleistiftes
unter Druck über das behandelte Textilmaterial und
beobachtet die zurückbleibenden Glanzunterschiede.
Sind keine Glanzunterschiede vorhanden, so schreibt
die Ware nicht.
C) Weißbruch:
Knickt man das Material scharf zusammen, so bilden
sich bei Weißbruch an der Knickstelle weißliche
Flecken und Zonen.

Die folgenden Beispiele erläutern die Erfindung:

Beispiel 1

Herstellung einer Voremulsion

16 g technischer Stearylalkohol werden in einer Mischung aus 15 g ethoxyliertem Stearylalkohol mit ca. 25 gebundenen Ethylenoxydeinheiten als Emulgator und 120 g n-Butylacrylat unter leichtem Erwärmen gelöst.

In diese Lösung rührt man nacheinander ein:

| 15 g | Isobutoxymethylacrylamid, technisch (85%ig) |
| 20 g | Acrylnitril |
| 60 g | Methacrylsäuremethylester |
| 150 g | Wasser, entmineralisiert |
| 3 ml | Wasserstoffperoxyd (30%ig). |

Durchführung der Polymerisation

In einem Rundkolben, ausgestattet mit Rührer, Rückflußkühler, Thermometer und Zulauftropftrichter werden 180 g Wasser (entmineralisiert) vorgelegt und auf ca. 60°C erwärmt. Nach Zugabe von ca. 40 ml der oben hergestellten Voremulsion wird mit verdünnter $H_2SO_4$ auf pH 4,5 bis 5,0 eingestellt, mit 2 ml einer 10%igen Natriumformaldehydsulfoxylatlösung versetzt und dadurch die Polymerisation gestartet, wobei die Temperatur auf ca. 65°C ansteigt. Der Zulauf der restlichen Voremulsion wird so geregelt, daß eine Temperatur von ca. 55 bis 65°C eingehalten und ein pH-Wert von 4,5 bis 5,5 (gegebenenfalls unter Korrektur) aufrechterhalten bleibt. Nach 1 bis 1 1/2 Stunden ist der Zulauf beendet, wobei zur Nachreaktion im Verlauf von einer Stunde noch 3 mal je 1 ml 10%iger Natriumformaldehydsulfoxylatlösung und einmal 0,5 g tertiäres Butylhydroperoxyd zugefügt werden.

0086889

- 17 -

Schließlich wird die Polymerisatemulsion mit wäßriger Ammoniaklösung auf einen pH-Wert von 5 bis 6 eingestellt. Die Emulsion hat einen Feststoffgehalt von ca. 40 Gew.%.


## Beispiel 2

Herstellung der Voremulsion

30 g Oleylalkohol, 15 g des im Beispiel 1 verwendeten Emulgators und 100 g entmineralisiertes Wasser werden bei 50 bis 60°C zu einer Emulsion verrührt und gekühlt. In diese Emulsion werden nacheinander

| 10 g | Isobutoxymethylacrylamid |
| 90 g | Methacrylsäuremethylester |
| 110 g | Acrylsäurebutylester und |
| 3 ml | Wasserstoffperoxyd (30%ig) |

zugegeben und mit einem Schnellrührer emulgiert.

Durchführung der Polymerisation

a) In einem Rundkolben wie in Beispiel 1 werden 160 ml Wasser vorgegeben und auf 50°C erwärmt. Nach Zugabe von ca. 50 ml der Voremulsion wird die Polymerisation mit 2 ml Natriumformaldehydsulfoxylatlösung gestartet. Das Verfahren wird in der im Beispiel 1 geschilderten Weise zu Ende geführt.

b) Der Ansatz wird wiederholt, jedoch mit dem Unterschied, daß in das vorgelegte Wasser die halbe Menge der Voremulsion (ohne Wasserstoffperoxyd) eingerührt, auf 45°C erwärmt und dann nach Zugabe der halben Menge des Wasserstoffperoxyds mit der halben Menge Natriumformaldehydsulfoxylatlösung gestartet wird. Die Temperatur steigt rasch auf 65°C an. Beim Abklingen der Reaktion wird gekühlt und mit der restlichen Voremulsion wieder bei 45°C mit dem Rest des Wasserstoffperoxyds und der Natriumsulfoxylatlösung gestartet. Nach dem Abklingen auch dieser Reaktion werden noch 3 mal je 1 ml Natriumformaldehydsulfoxylatlösung nachträglich zugefügt.

Beispiel 3

Aus 18 g Stearylalkohol, 15 g Emulgator (siehe Beispiel 1) und 100 g Wasser, entmineralisiert, wird bei 70 bis 80°C eine Emulsion hergestellt, in die nach dem Abkühlen 15 g Isobutoxymethylacrylamid, 20 g Acrylnitril, 60 g Methacrylsäuremethylester, 60 g Acrylsäureethylester, 60 g Acrylsäurebutylester und 3 ml Wasserstoffperoxydlösung (30%ig) eingerührt werden. In dem Kolben werden 200 g Wasser vorgelegt und weiter verfahren wie im Beispiel 1 beschrieben.

Beispiel 4

Das Beispiel 3 wird in der Weise abgewandelt, daß als polymerisierbare Monomere 10 g Isobutoxymethylacrylamid, 20 g Acrylnitril, 100 g Methacrylsäuremethylester und 80 g Acrylsäurebutylester zum Einsatz kommen.

Beispiel 5

Das Beispiel 1 wird in der Weise abgewandelt, daß als polymerisierbare Monomere 15 g Isobutoxymethylacrylamid,

- 19 -

20 g Acrylnitril, 60 g Methacrylsäuremethylester, 80 g
Acrylsäurebutylester und 40 g Maleinsäure-di-n-butylester
zum Einsatz kommen, wobei der Stearylalkohol und Emulgator in der Mischung aus Acrylsäurebutylester und Maleinsäurebutylester gelöst werden.

Beispiel 6

Das Beispiel 1 wird in der Weise abgewandelt, daß als
polymerisierbare Monomere 120 g Acrylsäurebutylester,
60 g Acrylsäuremethylester, 20 g Acrylnitril und 15 g
Isobutoxymethylacrylamid zum Einsatz kommen und bei der
Polymerisation eine Temperatur von 65 bis 75$^{o}$C eingehalten wird.

Beispiel 7

Das Beispiel 1 wird wiederholt, wobei anstelle des 15 g
Isobutoxymethylacrylamids 42 g einer 40%igen wäßrigalkoholischen Lösung einer Mischung aus gleichen Teilen
N-Methylolacrylamidethylether und N-Methylolacrylamid
neben geringen Anteilen an Acrylamid eingesetzt und der
Stearylalkohol durch die gleiche Menge Laurylalkohol ersetzt wird.

Beispiel 8 a

Das Beispiel 1 wird wiederholt, wobei das Isobutoxymethylacrylamid durch 25 g einer 50 gew.-%igen Lösung
von N-Methylolallylcarbamat und der Stearylalkohol durch
14 g Behenylalkohol ersetzt werden.

Beispiel 8 b

Verwendet man im Beispiel 8 a anstelle des N-Methylolallylcarbamates 45 g einer 30%igen Lösung von N-Methylolallylcarbamat, das zu ca. 25 Mol% mit Ethylalkohol verethert ist, so erhält man ein Emulsionspolymerisat mit ähnlichen Eigenschaften wie nach Beispiel 8 a.

Beispiel 9 a

Das Beispiel 1 wird wiederholt, wobei anstelle des ethoxylierten Stearylalkohols mit 25 Ethylenoxydeinheiten in gleicher Menge ein solches mit 40 Ethylenoxydeinheiten eingesetzt wird.

Beispiel 9 b

Der im Beispiel 9 a eingesetzte Emulgator wird durch 15 g einer Mischung aus gleichen Teilen eines mit 6 und eines mit 40 Ethylenoxydeinheiten je Mol Stearylalkohol alkoxylierten Fettalkohols ersetzt.

Beispiel 10

Das Beispiel 1 wird wiederholt, wobei der ethoxylierte Stearylalkohol durch die gleiche Menge eines ethoxylierten Nonylphenol-Adduktes mit 40 bis 50 Mol Ethylenoxyd-einheiten je Mol Nonylphenol ersetzt wird.

Beispiel 11

Das Nonylphenol-Ethylenoxyd-Addukt des Beispiels 10 wird ersetzt durch eine Mischung aus 7 g eines Laurylalkohol-Ethylenoxyd-Adduktes mit 40 gebundenen Ethylenoxydein-

heiten und 8 g eines Laurylalkohols, der je Mol 2 Mol
Propylen- und 8 Mol Ethylenoxyd-Einheiten gebunden enthält.


## Beispiel 12

Das Beispiel 1 wird wiederholt, wobei anstelle der 16 g
Stearylalkohol nur 5 g Stearylalkohol eingesetzt werden.


## Beispiel 13

Das Beispiel 1 wird wiederholt, wobei anstelle von Wasserstoffperoxyd als Initiator 1 g Ammoniumpersulfat in Form
einer 10%igen Lösung eingesetzt werden.


## Beispiel 14

Das Beispiel 1 wird wiederholt, wobei zusätzlich 25 g
tert.-Butylacrylat und 20 g Acrylsäure eingesetzt werden,
als Emulgator eine Mischung aus 3,5 g des im Beispiel 1
genannten ethoxylierten Stearylalkohols und 16 g Nonylphenoldiglykolether-Na-sulfat 30%ig verwendet wird und
nur 3 g Stearylalkohol zum Einsatz gelangen.


## Anwendungsbeispiele

## Allgemeine Vorschrift

100 g des Polymerisats (ca. 35 bis 55 % Feststoff) werden
mit ca. 1 bis 2 ml einer Ammoniak-lösung auf einen pH-
Wert von 10 bis 11 eingestellt. Bei Zugabe von Polyacrylsäure (als Verdickungsmittel) steigt die Viskosität stark
an. Es wird so viel Polyacrylsäure zugegeben, daß die gewünschte Viskosität erreicht ist, was bei ca. 5 000 bis
20 000 mPa·s, gemessen nach Brookfield, der Fall ist.

Mit der so erhaltenen viskosen Masse wird das Textilmaterial in zwei Strichen mit Zwischentrocknung (3 Minuten bei 130°C)beschichtet und nach erneutem Trocknen
während 3 Minuten auf 150°C erhitzt.

Ergebnisse mit den Emulsionen, hergestellt nach den Beispielen 1 bis 14, jeweils eingestellt auf eine Viskosität
von 10 000 mPa·s:

Behandelte Ware: Polyestergewebe mit einem $m^2$-Gewicht von
220 g; Trockenauflage (nach 2 Strichen)
ca. 40 bis 60 g/$m^2$.

An den Mustern ist weder Schreibtendenz noch Weißbruch
festzustellen.

Bei der Prüfung auf Weißquellung nach der vorne angegebenen Methode wurden folgende Ergebnisse erzielt:

| Emulsion des Beispieles | Weißquellung | Emulsion des Beispieles | Weißquellung |
|---|---|---|---|
| 1 | +++ | 8 a | + |
| 2 a | +++ | 8 b | ++ |
| 2 b | ++ | 9 a | ++ |
| 3 | +++ | 9 b | ++ |
| 4 | ++ | 10 | + |
| 5 | ++ | 11 | + |
| 6 | ++ | 12 | + |
| 7 | + | 13 | ++ |
|  |  | 14 | +++ |

Patentansprüche

1. Verfahren zur Herstellung von Emulsionscopolymerisaten auf Basis von Estern organischer Verbindungen, die eine zur Polymerisation befähigte Doppelbindung enthalten und sich von einwertigen Säuren ableiten, und damit copolymerisierbaren, ungesättigten Verbindungen in wäßrigem System in Gegenwart von Emulgatoren, die zur Bildung von Öl/Wasser-Emulsionen befähigt sind, und Fettalkoholen mit 10 bis 22 C-Atomen unter den für eine Radikalkettenpolymerisation üblichen Bedingungen und Hilfsmitteln, dadurch gekennzeichnet, daß man

a) als Emulgatoren Addukte von Alkylenoxyden an Fettalkohole mit 8 bis 22 C-Atomen, an Alkylphenole mit Alkylresten mit 4 bis 12 C-Atomen, deren Mischungen miteinander und gegebenenfalls Mischungen derselben mit untergeordneten Mengen an üblichen, anionischen Emulgatoren bzw. mit Alkali-$C_{6-12}$-alkylphenolglykolethersulfaten bis zum Gewichtsverhältnis 1 : 3,

b) als Ester von einwertigen Säuren 100 bis 70 GT (=Gewichtsteile) Acrylsäure- und/oder Methacrylsäureester von Alkoholen mit 1 bis 12 C-Atomen, und/oder Vinylester von Carbonsäuren mit 2 bis 12 C-Atomen und deren Mischungen, wobei der Anteil an Methacrylsäuremethylester und/oder Vinylacetat, bezogen auf die Komponenten b) höchstens 60 Gew.% beträgt und zusätzlich

c) 0 bis 30 GT mit den Komponenten b) und d) copolymerisierbare Verbindungen, wobei die Summe von b) und c) 100 GT beträgt,

d) 2 bis 10 GT N-Methylolacryl- und/oder N-Methylolmethacrylamid, das mindestens zu 20 Mol% mit einem Alkohol mit 1 bis 6 C-Atomen verethert ist, und/oder N-Methylolallyl- und/oder N-Methylolmethallylcarbamat und deren Ether mit 1 bis 6 C-Atomen und deren Mischungen, und daß man

e) den Fettalkohol in einer Menge von 1 bis 16 GT einsetzt.

2. Verfahren nach Patentanspruch 1, dadurch gekennzeichnet, daß man als Komponente c) 10 bis 30 GT Acryl- und/oder Methacrylnitril einsetzt.

3. Verfahren nach den Patentansprüchen 1 und 2, dadurch gekennzeichnet, daß man für b) eine Mischung aus Methacrylsäuremethylester und einem Acrylsäureester von Alkoholen mit 2 bis 8 C-Atomen einsetzt.

4. Verfahren nach den Patentansprüchen 1 bis 3, dadurch gekennzeichnet, daß man für d) Isobutoxymethylacrylamid, Isobutoxymethylmethacrylamid und deren Mischungen einsetzt.

5. Verfahren nach den Patentansprüchen 1 bis 4, dadurch gekennzeichnet, daß man für a) Addukte von Ethylenoxyd an Fettalkohole mit durchschnittlich 10 bis 50 angelagerten Ethylenoxydeinheiten, Addukte von Ethylenoxyd an Alkylphenole mit durchschnittlich 20 bis 90 angelagerten Ethylenoxydeinheiten und deren Mischungen einsetzt.

6. Verfahren nach Patentanspruch 5, dadurch gekennzeichnet, daß man für a) ein Fettalkohol-Ethylenoxyd-Addukt mit 20 bis 30 Ethylenoxydeinheiten je Mol Fettalkohol einsetzt.

7. Verfahren nach den Patentansprüchen 1 bis 6, dadurch gekennzeichnet, daß man aus einem Teil des Wassers, dem Emulgator, den zu polymerisierenden Monomeren, dem Fettalkohol und gegebenenfalls dem Initiator und gegebenenfalls den Hilfsmitteln eine Voremulsion herstellt und nach dem Zulaufverfahren in bekannter Weise polymerisiert.

8. Emulsionscopolymerisate, hergestellt nach den Patentansprüchen 1 bis 7.

9. Verwendung der Emulsionscopolymerisate nach Patentanspruch 8 zur Behandlung von Fasermaterial, insbesondere von Textilmaterial.

10. Verwendung nach Patentanspruch 9 zum Beschichten von Textilmaterial.